# EUROPÄISCHE PATENTANMELDUNG

(11) **EP 1 107 441 A2**
(43) Veröffentlichungstag der Anmeldung: **13.06.2001**
(21) Anmeldenummer: 00123898.9
(22) Anmeldetag: 03.11.2000
(51) Int. Cl.: H02P 1/46, H02P 6/00

(54) **Elektronisch kommunierter Gleichstrommotor**

(30) Priorität: 01.12.1999 DE 29921161 U
(71) Anmelder: Papst-Motoren GmbH & Co. KG, 78112 St. Georgen (DE)
(72) Erfinder: Schmider, Fritz, 78132 Hornberg (DE); Lukenich, Stefan, 78224 Singen (DE)
(74) Vertreter: Raible, Hans, Dipl.-Ing.

(57) **Zusammenfassung**

Ein elektronisch kommutierter Motor (4) hat einen Stator (14) mit zwei Wicklungssträngen (25, 26), welche während einer Rotordrehung von 360° el. alternierend mit Strom versorgt werden. Ferner hat der Motor einen permanentmagnetischen Rotor (28), welcher bei stromlosem Motor (4) mindestens eine vorgegebene Drehstellung einnimmt, aus der der Rotor bei Erregung eines vorgegebenen Wicklungsstranges in einer gewünschten Drehrichtung startet. Zum alternierenden Einschalten der beiden Wicklungsstränge ist ein bistabiler Multivibrator (64) vorgesehen, welcher durch die Spannung gesteuert wird, die vom Rotor im augenblicklich stromlosen Wicklungsstrang induziert wird. Der bistabile Multivibrator (64) hat eine elektrische Vorzugsstellung (92), die er beim Einschalten des Motors (4) einnimmt, um beim Einschaltvorgang die Stromversorgung des vorgegebenen Wicklungsstranges zu bewirken und dadurch den Start des Rotors in der gewünschten Drehrichtung zu ermöglichen. Beim Start kann der Motorstrom vorübergehend erhöht werden, um das Drehmoment beim Start zu erhöhen.

## Beschreibung

Die Erfindung betrifft einen elektronisch kommutierten Gleichstrommotor. Derartige Motoren werden u.a. zum Antrieb kleiner Lüfter verwendet, vgl. die EP-A1-0 908 630. Aus verschiedenen Gründen kann es wünschenswert sein, einen solchen Motor ohne Hallgenerator zu betreiben und ihn zu diesem Zweck mit der Spannung zu kommutieren, die im Betrieb vom Rotor in der Statorwicklung induziert wird. Dies ist z.B. bekannt aus US 4 156 168, doch ist bei diesem bekannten Motor nicht sicher, in welche Drehrichtung er nach dem Einschalten starten wird, und deshalb eignet sich dieser bekannte Motor nur für Spezialanwendungen, bei denen die Drehrichtung keine Rolle spielt.

Es ist deshalb eine Aufgabe der Erfindung, einen neuen elektronisch kommutierten Motor bereitzustellen.

Diese Aufgabe wird gelöst durch einen elektronisch kommutierten Motor nach Anspruch 1. Man verwendet also einen Motor mit einem Rotor, der bei stromlosem Motor mindestens eine mechanische Vorzugsstellung hat. Zum Steuern des Stromes im Motor verwendet man einen bistabilen Multivibrator, der beim Start eine elektrische Vorzugsstellung hat, welche an die mechanische Vorzugsstellung des Rotors angepasst ist. Beim Einschalten wird durch die elektrische Vorzugsstellung der Stator so erregt, dass der Rotor aus seiner mechanischen Vorzugsstellung in der richtigen Drehrichtung startet. Durch den Wegfall eines separaten Rotorstellungssensors hat ein solcher Motor einen einfachen Aufbau bei gutem Wirkungsgrad, da der Stromverbrauch für einen Rotorstellungssensor entfällt. Die Erfindung ist deshalb besonders vorteilhaft für Klein- und Kleinstmotoren, bei denen der Stromverbrauch eines Rotorstellungssensors, z.B. eines HaII-IC, den elektrischen Wirkungsgrad stark reduzieren würde, und sie eignet sich z.B. sehr gut für Motoren, bei denen die elektronischen Komponenten vom eigentlichen Motor (Stator mit Statorwicklung, und Rotor) getrennt angeordnet sind.

Besonders vorteilhaft ist die Weiterbildung gemäß Patentanspruch 3, speziell in Kombination mit einem Radiallüfter, wie in Patentanspruch 13 angegeben, weil ein Radiallüfter mit einem solchen Motor unerwartet besonders vorteilhafte Eigenschaften hat, insbesondere höhere Sicherheitsreserven, wenn ein Filter in seinem Luftkreislauf partiell verstopft ist.

Weitere Einzelheiten und vorteilhafte Weiterbildungen der Erfindung ergeben sich aus dem im folgenden beschriebenen und in der Zeichnung dargestellten, in keiner Weise als Einschränkung der Erfindung zu verstehenden Ausführungsbeispiel, sowie aus den Unteransprüchen. Es zeigt:
- Fig. 1: einen Längsschnitt durch einen Lüfter 1, der von einem elektronisch kommutierten Motor 4 angetrieben wird,
- Fig. 2: eine Draufsicht auf den Lüfter der Fig. 1, gesehen in Richtung des Pfeiles II der Fig. 1,
- Fig. 3: eine Übersichtsdarstellung einer Schaltung für einen erfindungsgemäßen Motor,
- Fig. 4: ein bevorzugtes Ausführungsbeispiel einer Schaltung entsprechend Fig. 3 mit weiteren Einzelheiten,
- Fig. 5: eine Darstellung der Spannung, welche im Betrieb am Wicklungsstrang 25 der Fig. 4 auftritt, also zwischen den Punkten 3A und 3B,
- Fig. 6: eine Darstellung des Gesamtstroms I bei der Anordnung gemäß Fig. 4,
- Fig. 7: eine Darstellung der Spannung an einem Ausgang S der Schaltung der Fig. 4 bei rotierendem Motor, und
- Fig. 8: eine Darstellung der Spannung am Ausgang S der Fig. 4 bei blockiertem Rotor 6.

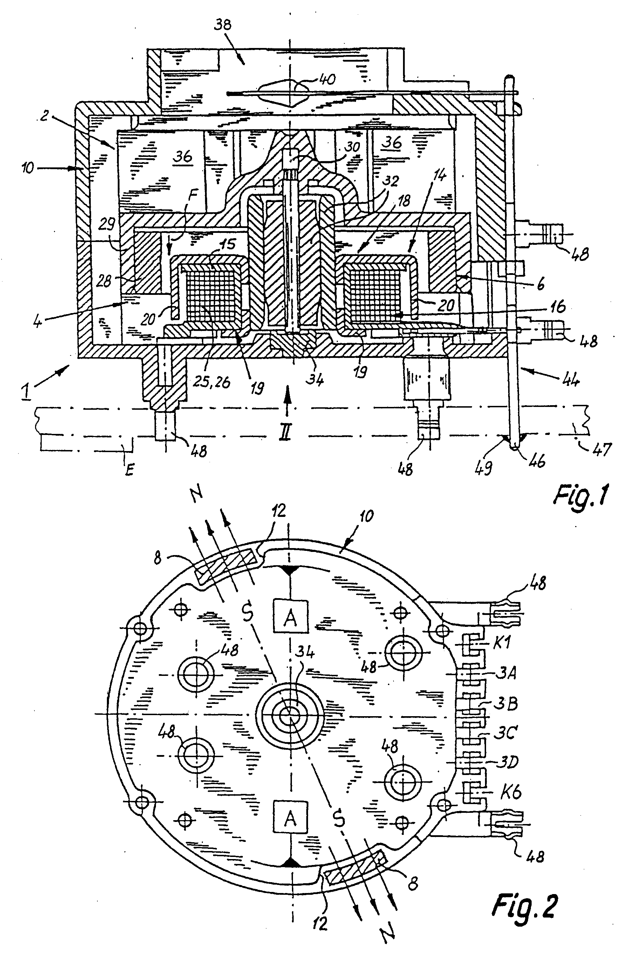

Die **Fig. 1 und 2** zeigen rein beispielhaft einen Radiallüfter 1, wie er aus der EP 0 908 630 A1 (EP-7008) bekannt ist. Dieser hat ein Lüfterrad 2 und einen elektronisch kommutierten Außenläufer-Klauenpolmotor 4, welcher das Lüfterrad 2 direkt antreibt. Der Motor 4 hat einen permanentmagnetischen Außenrotor 6. Gemäß Fig. 2 sind zwei diametral gegenüberliegende Positioniermagnete 8 vorgesehen, welche im Stillstand des Motors 4 den Rotor 6 in eine Vorzugsstellung, auch Startstellung genannt, drehen, aus der er leicht anlaufen kann. Die Magnete 8 sind in Taschen 12 des Lüftergehäuses 10 angeordnet.

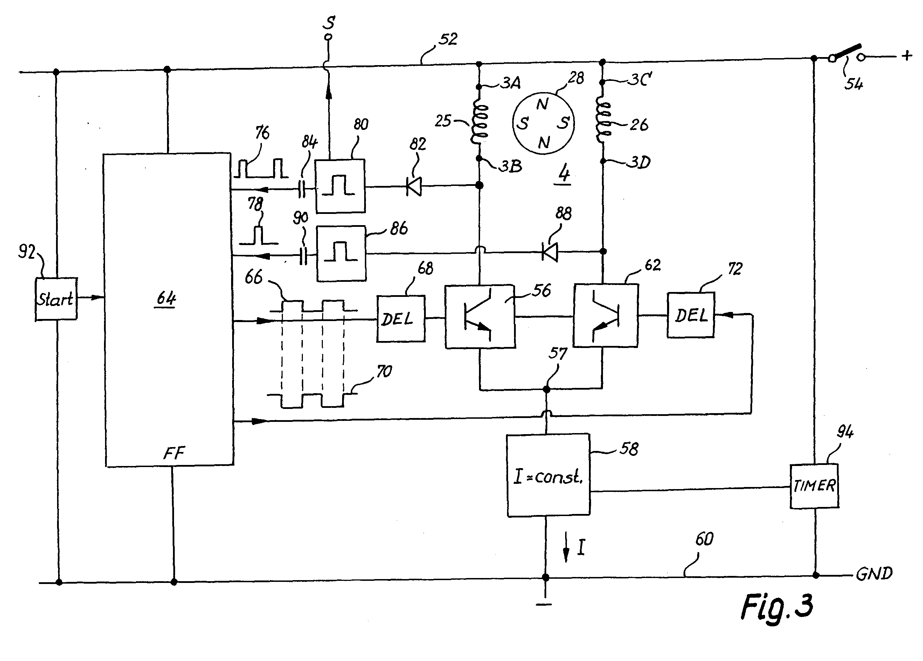

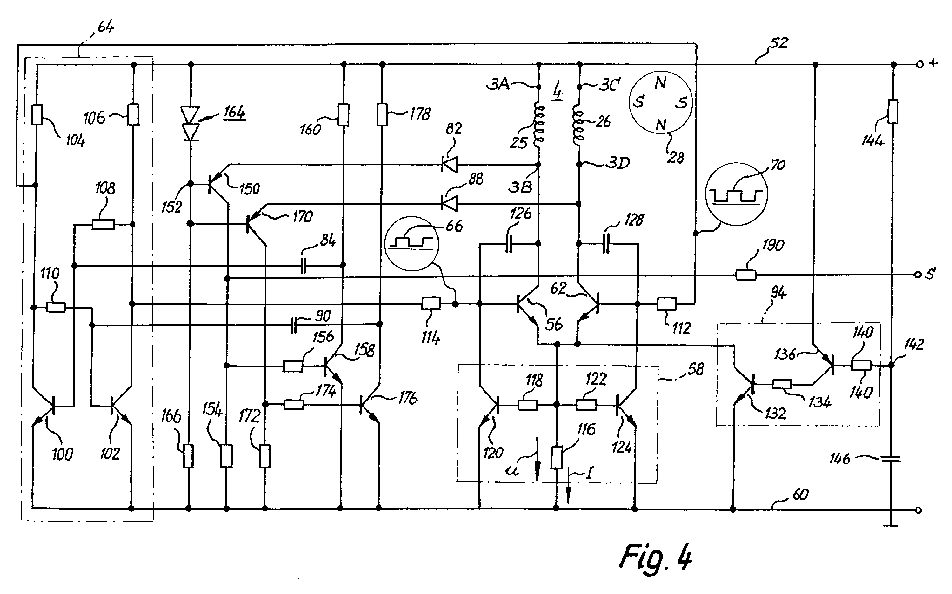

Der Motor 4 hat einen Stator 14 mit zwei gegenüberliegenden Klauenpolblechen 18, 19, zwischen welchen sich, wie dargestellt, auf einem Wickelkörper 15 eine ringförmige Wicklung 16 befindet. Diese ist bifilar gewickelt und hat zwei Wicklungsstränge 25 und 26, die auch in den Fig. 3 und 4 dargestellt sind. Der Strang 25 hat zwei Anschlüsse 3A und 3B, die in den Fig. 2, 3 und 4 dargestellt sind, und der Strang 26 hat zwei Anschlüsse 3C und 3D.

Die Klauenpolbleche 18, 19 haben Klauenpole 20, die sich in axialer Richtung erstrecken, vgl. Fig. 1. Der Rotormagnet ist mit 28 bezeichnet und kann ein sogenannter Gummimagnet sein, also eine Mischung aus Gummi und Hartferriten. Er befindet sich in einem Trägerteil 29, das einstückig mit dem Lüfterrad 2 ausgebildet ist und in dem auch eine Welle 30 befestigt ist. Letztere läuft in einem Radial-Gleitlager 32, und ihr freies Ende ist an einem Axiallager 34 axial abgestützt. Der Rotor 6 ist gegenüber dem Stator 14 axial versetzt, um eine Kraft F in Richtung auf das Lager 34 zu erzeugen.

Das Lüfterrad 2 hat radial verlaufende Lüfterflügel 36, d.h. es handelt sich um einen Radiallüfter. Eine axiale Luft-Ansaugöffnung ist mit 38 bezeichnet. In ihr befindet sich ein NTC-Widerstand 40, der als Temperatursensor dient und an zwei Anschlüsse K1 und K6 (Fig. 2) angeschlossen ist.

Die Anschlüsse K1, K6 und 3A bis 3D erstrecken sich in axialer Richtung nach unten in Form von länglichen Stiften 44, deren untere Enden 46 an einer strichpunktiert angedeuteten Leiterplatte 47 festgelötet werden können, wie das bei 49 dargestellt ist. Ferner sind Halterungen 48 für die Befestigung des Lüfters 1 vorgesehen. Mit diesen Halterungen kann der Lüfter z.B. an der Leiterplatte 47 befestigt werden.

Lüfter dieser Art eignen sich besonders gut zur Verwendung als sogenannte Leiterplattenlüfter, d.h. zur direkten Anordnung auf einer Leiterplatte, um dort befindliche Bauteile zu kühlen. Hinsichtlich weiterer Einzelheiten wird verwiesen auf die EP 0 908 630 A1.

Häufig werden die elektronischen Bauelemente E für den Betrieb eines solchen Lüfters vom Kunden auf seiner eigenen Leiterplatte 47 montiert, wie das in Fig. 1 symbolisch angedeutet ist, und der Kunde kauft sich nur einen "nackten" Lüfter 1 und montiert diesen auf seiner Leiterplatte, so dass erst durch diese Montage ein lauffähiger Motor entsteht. Diese Art der "Motorherstellung" verbietet im allgemeinen die Verwendung von Rotorstellungssensoren, z.B. eines Hallgenerators, wie sie sonst häufig bei elektronisch kommutierten Motoren verwendet werden, um die Kommutierung zu steuern.

Da sich der Rotormagnet 28 beim Start des Motors durch die Wirkung der stationären Magnete 8 in einer vorgegebenen Startstellung, oder in einer aus einer Mehrzahl vorgegebener Startstellungen, befindet, muss beim Einschalten ein vorgegebener Wicklungsstrang der Statorwicklung 16 einen Startstrom in einer vorgegebenen Richtung erhalten. Zum Einschalten dieses Startstroms dient die Schaltung gemäß Fig. 3 und 4. Durch diesen Startstrom wird der Rotormagnet 28 in der gewünschten Richtung in Umdrehung versetzt und induziert dadurch Spannungen in den beiden Wicklungssträngen 25 und 26, und diese Spannungen bewirken, nach einer geeigneten Impulsformung, die Kommutierung des Stroms durch die beiden Wicklungsstränge 25 und 26. Man bezeichnet das auch als Kommutierung mit der induzierten Spannung.

Selbstverständlich kann statt des Motors nach dem EP-A1-0 908 630 in gleicher Weise z.B. ein Motor nach dem DE-U1-295 01 695.7 oder dem DE-U1-8 702 271.0 verwendet werden. Es handelt sich also bei den Figuren 1 und 2 nur um ein bevorzugtes Ausführungsbeispiel, dessen Zweck es ist, ein besseres Verständnis der Erfindung zu ermöglichen, denn ohne ein solches Beispiel wäre die Erfindung möglicherweise schwer verständlich.

**Fig. 3** zeigt ein Übersichtsschaltbild zur Erläuterung von Grundfunktionen der vorliegenden Erfindung.

Wie Fig. 3 zeigt, ist der Wicklungsstrang 25 mit seinem Anschluss 3A an eine Plusleitung 52 angeschlossen, die über einen Schalter 54 an eine (nicht dargestellte) Spannungsquelle angeschlossen werden kann, gewöhnlich an die Batterie eines Fahrzeugs mit einer Spannung zwischen 8 und 16 V. Der andere Anschluss 3B des Wicklungsstrangs 25 ist mit einem ersten Halbleiterschalter 56 verbunden, der seinerseits über einen Knotenpunkt 57 und einen Stromregler 58 mit einer Minusleitung 60 (Masse) verbunden ist.

Der zweite Wicklungsstrang 26 ist mit seinem Anschluss 3C an die Plusleitung 52 angeschlossen, und sein Anschluss 3D ist über einen zweiten Halbleiterschalter 62 mit dem Knotenpunkt 57 verbunden.

Zum Steuern der Halbleiterschalter 56, 62 dient ein bistabiler Flipflop 64, der im Betrieb erste rechteckförmige Kommutierungssignale 66 erzeugt, welche über eine Verzögerungsschaltung 68 dem ersten Halbleiterschalter 56 zugeführt werden, sowie zweite rechteckförmige Kommutierungssignale 70, die zu den ersten rechteckförmigen Kommutierungssignalen 66 gegenphasig sind und die über eine Verzögerungsschaltung 72 dem zweiten Halbleiterschalter 62 zugeführt werden.

Die Verzögerungsschaltungen 68, 72 haben die Funktion, das Ein- und Ausschalten der Halbleiterschalter 56 bzw. 62 zu verzögern und weniger abrupt zu machen, damit der Motor 4 besonders ruhig läuft.

Zur Umschaltung des Flipflops 64 dienen Impulse 76, 78. Zur Erzeugung der Impulse 76 dient eine Anordnung 80, der über eine Diode 82 die sogenannte induzierte Spannung oder Gegen-EMK (counter EMF) zugeführt wird, die vom Rotormagneten 28 im stromlosen Wicklungsstrang 25 induziert wird. Diese Spannung wird in der Anordnung 80 in ein Rechtecksignal umgeformt, und dessen Flanken werden durch einen Kondensator 84 differenziert und erzeugen die Impulse 76, welche den Flipflop 64 in die eine Richtung kommutieren.

Zur Erzeugung der Impulse 78, welche zu den Impulsen 76 zeitlich versetzt sind, dient eine Anordnung 86, der über eine Diode 88 die Spannung zugeführt wird, die vom Rotormagneten 28 im stromlosen Wicklungsstrang 26 induziert wird. Diese wird in der Anordnung 86 in ein Rechtecksignal umgeformt, und dessen Flanken werden durch einen Kondensator 90 differenziert und erzeugen die Impulse 78, welche den Flipflop 64 in die andere Richtung kommutieren.

Für den Start erhält der Flipflop 64 eine bestimmte elektrische Stellung durch eine Startvorrichtung 92.

Da die Betriebsspannung bei einem Kraftfahrzeug z.B. zwischen 8 und 16 V liegen kann, wird durch den Stromregler 58 der Motorstrom I (Fig. 3) auf einen vorgegebenen Wert geregelt, der z.B. für einen bestimmten Lüfter 1 einer Drehzahl von 2800 n entspricht. Direkt nach dem Einschalten des Schalters 54 wird der Stromregler 58 durch ein Zeitglied 94 während einer vorgegebenen Zeitspanne deaktiviert, damit der Motor 4 mit seiner maximalen Leistung anlaufen kann. Die Verwendung eines Stromreglers in Verbindung mit einem Radiallüfter hat besondere Vorteile, weil der Lüfter dadurch eine besonders "steile Kennlinie" erhält, d.h. wenn die Luft für den Lüfter durch ein Filter strömt und dieses ist partiell verstopft, so steigt die Lüfterdrehzahl automatisch an, und dadurch wird auch dann noch Luft durch das Filter gepresst, wenn das bei einem Axiallüfter nicht mehr der Fall wäre. Dies erhöht die Sicherheit.

### Arbeitsweise (Fig. 3)

Beim Einschalten wird der Konstantstromregler 58 durch das Zeitglied 94 während einer vorgegebenen Zeit deaktiviert, z.B. während 0,5 Sekunden, damit der Motor 4 mit maximalem Strom starten kann. Gleichzeitig wird durch das Schaltglied 92 der Flipflop 64 in eine geeignete elektrische Stellung gebracht, so dass z.B. der erste Halbleiterschalter 56 eingeschaltet wird und der erste Wicklungsstrang 25 Strom erhält, wodurch sich der Rotormagnet 28 mit hoher Beschleunigung in der gewünschten Drehrichtung zu drehen beginnt.

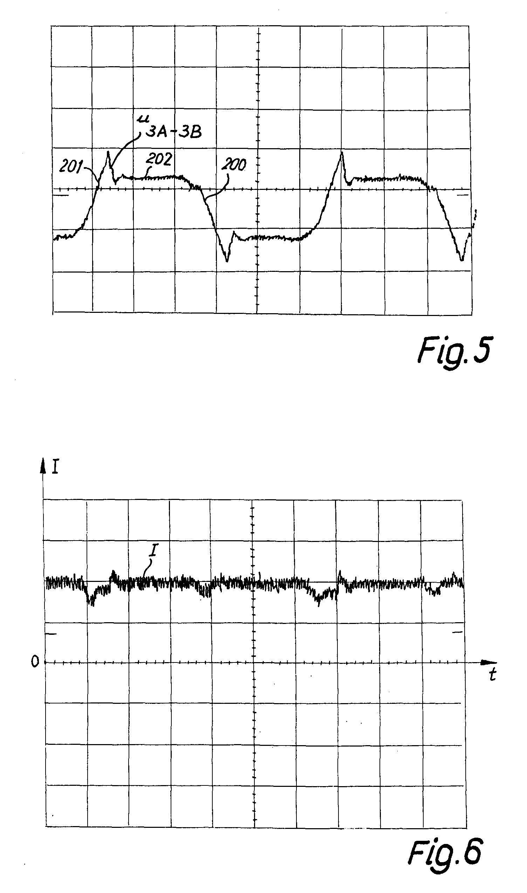

Bei dieser Drehung wird durch den Rotormagneten 28 in jedem der Wicklungsstränge 25 und 26 eine alternierende Spannung induziert, vgl. **Fig. 5**. Der positive Teil der alternierenden Spannung am Wicklungsstrang 25 wird über die Diode 82 der Anordnung 80 zugeführt, und der positive Teil der alternierenden Spannung am Wicklungsstrang 26 wird über die Diode 88 der Anordnung 86 zugeführt.

In den Anordnungen 80, 86 werden die betreffenden Spannungen in Rechtecksignale umgesetzt, und diese werden durch die Kondensatoren 84 bzw. 90 differenziert, wodurch die Impulse 76 bzw. 78 entstehen, die den Flipflop 64 zwischen seinen bistabilen Stellungen umschalten.

Dadurch entstehen die Impulsfolgen 66, 70, welche - bei Drehung des Rotormagneten 28 - die Kommutierung des Motors 4 bewirken, also das Ein- und Ausschalten der Halbleiterschalter 56 bzw. 62.

Wenn der Motor 4 beginnt, seine Betriebsdrehzahl zu erreichen, wird der Stromregler 58 durch das Zeitglied 94 aktiviert und regelt den Strom I auf einen vorgegebenen Wert, der unabhängig von der Höhe der Betriebsspannung ist. Letztere kann bei einem Kraftfahrzeug im Verhältnis 1 : 2 variieren. Bei definierter Last, z.B. beim Antriebe eines Lüfters, stellt der Strom I ein indirektes Maß für die Drehzahl dar, d.h. wenn man den Strom I auf einen vorgegebenen Wert regelt, so wird dadurch die Drehzahl auf einem vorgegebenen Wert gehalten.

**Fig. 4** zeigt ein bevorzugtes Ausführungsbeispiel der Erfindung. Gleiche oder gleich wirkende Teile werden mit denselben Bezugszeichen bezeichnet wie in den vorhergehenden Figuren, und gewöhnlich nicht nochmals beschrieben.

Der bistabile Flipflop 64 enthält zwei npn-Transistoren 100, 102, deren Emitter mit der Minusleitung 60 verbunden sind und deren Kollektoren jeweils über einen Widerstand 104 bzw. 106 mit der Plusleitung 52 verbunden sind. Die Basis des Transistors 100 ist über einen Widerstand 108 mit dem Kollektor des Transistors 102 verbunden, und die Basis des Transistors 102 über einen Widerstand 110 mit dem Kollektor des Transistors 100.

Ist der Transistor 100 leitend, so hat die Basis des Transistors 102 ein niedriges Potential, und dieser Transistor sperrt, so dass der Transistor 100 über den Widerstand 108 einen Basisstrom erhält. Wegen der Symmetrie der Schaltung gilt dies genauso umgekehrt. Der Flipflop 64 hat also zwei stabile Zustände, und er kann durch elektrische Impulse zwischen diesen stabilen Zuständen hin- und hergeschaltet werden. Dieses Hin- und Herschalten erfolgt jeweils zum Zeitpunkt des Nulldurchgangs der negativen Flanken der induzierten Spannung.

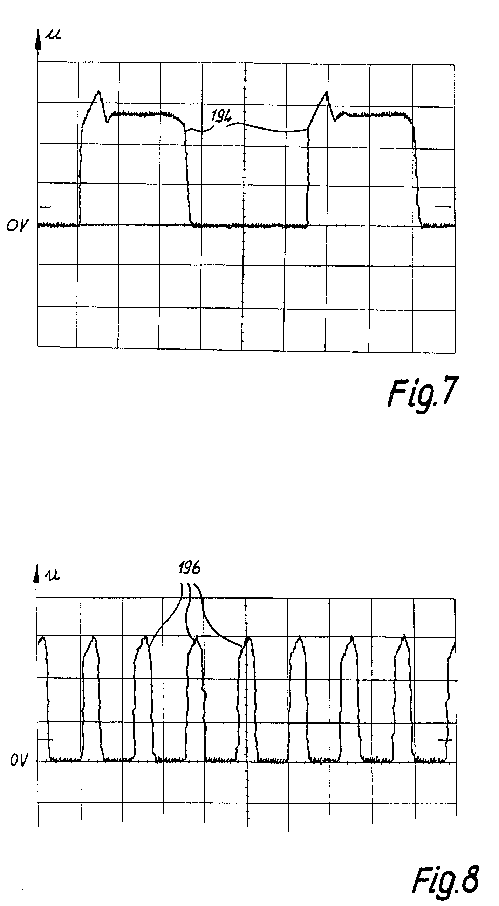

Wenn der Transistor 100 leitend ist, erhält über einen Widerstand 112 die Basis des npn-Transistors 62, der als zweiter Halbleiterschalter dient, ein niedriges Potential, und dieser Transistor sperrt. Der Transistor 102 ist gesperrt, und deshalb erhält der npn-Transistor 56, der als erster Halbleiterschalter dient, über den Widerstand 106 und einen Widerstand 114 ein positives Potential an seiner Basis und wird leitend, so dass ein Strom durch den Wicklungsstrang 25 fließt. Dieser Strom I wird durch den Stromregler 58 auf einen etwa konstanten Wert geregelt, vgl. **Fig. 6**.

Der Strom I fließt durch einen gemeinsamen Emitterwiderstand 116 der Transistoren 56 und 62, und die Spannung u an diesem Widerstand 116 wird über einen Widerstand 118 der Basis eines npn-Transistors 120 und über einen Widerstand 122 der Basis eines npn-Transistors 124 zugeführt. Der Kollektor des Transistors 120 ist mit der Basis des Transistors 56 verbunden, und der Kollektor des Transistors 124 mit der Basis des Transistors 62. Die Emitter der Transistoren 120, 124 sind mit der Minusleitung 60 verbunden.

Wenn der Strom I ansteigt, werden die Transistoren 120 und 124 stärker leitend, so dass der Basisstrom des im Augenblick leitenden Transistors 56 oder 62 entsprechend reduziert wird, was eine Verminderung des Stromes I bewirkt. Dieser wird dadurch auf einem im wesentlichen konstanten Wert gehalten, vgl. das Oszillogramm der Fig. 6. Der Radiallüfter 1 wird also mit Konstantstrom betrieben, d.h. der Motorstrom wird ständig auf einen gewünschten Wert begrenzt.

Jeder der Transistoren 56, 62 ist mit einem sogenannten Millerkondensator 126 bzw. 128 zwischen seinem Kollektor und seiner Basis versehen. Im Zusammenwirken mit dem Basiswiderstand 114 bzw. 112 bewirkt dieser eine Verzögerung des Stromanstiegs und des Stromabfalls im betreffenden Transistor und dadurch einen besonders ruhigen Lauf des Motors 4. Die Millerkondensatoren 126, 128 und die Widerstände 112, 114 stellen also eine Ausführungsform der Verzögerungsschaltungen 68, 72 der Fig. 3 dar. Durch das Konstantstromglied 58 wird auch vermieden, dass bei den Schaltverzögerungen, welche durch die Millerkondensatoren bewirkt werden, Stromspikes entstehen.

Das Zeitglied 94 dient dazu, während einer Zeit von z.B. 0,5 Sekunden nach dem Einschalten des Motors 4 den Stromregler 58 dadurch zu deaktivieren, dass dieser durch einen npn-Transistor 132 überbrückt wird.

Der Transistor 132 wird gesteuert von einem pnp-Transistor 136, dessen Kollektor über einen Widerstand 134 mit der Basis des Transistors 132 verbunden ist, dessen Emitter mit der Plusleitung 52 verbunden ist, und dessen Basis über einen Widerstand 140 mit einem Knotenpunkt 142 verbunden ist, der über einen Widerstand 144 mit der Plusleitung 52 und über einen Kondensator 146 mit der Minusleitung 60 verbunden ist.

Beim Einschalten des Motors 4 ist der Kondensator 146 entladen, so dass der Transistor 136 ein negatives Basispotential hat und leitet. Dadurch erhält der Transistor 132 einen Basisstrom und ist ebenfalls leitend, so dass er den Stromregler 58 überbrückt.

Über den Widerstand 144 lädt sich nun der Kondensator 146 auf, wodurch nach ca. 0,5 Sekunden die beiden Transistoren 136 und 132 gesperrt werden, so dass der Stromregler 58 aktiviert wird. Zu diesem Zeitpunkt hat der Motor 4 gewöhnlich seine Betriebsdrehzahl erreicht.

Die Diode 82 ist mit ihrer Anode verbunden mit dem Anschluss 3B des ersten Wicklungsstrangs 25, und mit ihrer Kathode mit dem Emitter eines pnp-Transistors 150, dessen Basis mit einem Knotenpunkt 152 und dessen Kollektor über einen Widerstand 154 mit der Minusleitung 60 und über einen Widerstand 156 mit der Basis eines npn-Transistors 158 verbunden ist, dessen Emitter an die Minusleitung 60 angeschlossen ist und dessen Kollektor über einen Widerstand 160 mit der Plusleitung 52 und über den Kondensator 84 (vgl. Fig. 3) mit der Basis des Transistors 100 verbunden ist.

Der Knotenpunkt 152 ist über die Reihenschaltung 164 zweier Dioden, z.B. BAV99, mit der Plusleitung 52 und über einen Widerstand 166 (z.B. 51 kQ) mit der Minusleitung 60 verbunden. Dadurch hat der Knotenpunkt 152 ein Potential, das um eine im wesentlichen konstante Spannung negativer ist als das Potential der Plusleitung 52. Hierdurch werden die Transistoren 150, 170 an ihre Schaltschwelle gebracht, so dass der Transistor 150 den zeitlich späteren Nulldurchgang (in Fig. 5 etwa bei 200) der in der Wicklung 25 induzierten positiven Spannung erfasst, und der Transistor 170 den zeitlich späteren Nulldurchgang der in der Wicklung 26 induzierten positiven Spannung erfasst.

Die Diode 88 ist mit ihrer Anode verbunden mit dem Anschluss 3D des zwei-ten Wicklungsstrangs 26, und mit ihrer Kathode mit dem Emitter eines pnpTransistors 170, dessen Basis mit dem Knotenpunkt 152 und dessen Kollektor über einen Widerstand 172 mit der Minusleitung 60 und über einen Widerstand 174 mit der Basis eines npn-Transistors 176 verbunden ist, dessen Emitter an die Minusleitung 60 angeschlossen ist und dessen Kollektor über einen Widerstand 178 mit der Plusleitung 52 und über den Kondensator 90 (vgl. Fig. 3) mit der Basis des Transistors 102 verbunden ist.

Wenn der Transistor 56 leitend ist, hat der Punkt 3B ein niedriges Potential, und die Diode 82 ist gesperrt. Wenn durch die Kommutierung der Transistor 56 gesperrt wird, wird die Wicklung 25 stromlos, und durch den Rotor 19 wird in der Wicklung 25 eine positive Spannungshalbwelle 202 (Fig. 5) induziert, die positiver ist als das Potential am Knotenpunkt 152, so dass die Diode 82 leitend wird und der Transistor 150 einen Basisstrom erhält, ebenfalls leitend wird, und seinerseits den Transistor 158 leitend macht, so dass über den Kondensator 84 der Transistor 100 des Flipflop 64 gesperrt gehalten wird und über den Widerstand 112 der Transistor 62 einen Basisstrom erhält und einen Strom durch den zweiten Wicklungsstrang 26 fließen lässt.

Nach einer Rotordrehung von etwa 180° el. sinkt das Potential am Punkt 3B unter das Potential am Knotenpunkt 152, so dass die Diode 82, der Transistor 150 und der Transistor 158 sperren, d.h. die Spannung am Kollektor des Transistors 158 wird plötzlich positiver, und der Kondensator 84 überträgt diese Potentialänderung auf die Basis des Transistors 100 im Flipflop 64, so dass der Transistor 100 leitend und folglich - über den Widerstand 110 - der Transistor 102 gesperrt wird.

Das Umschalten des Flipflops 64 wird also bewirkt durch die in Fig. 5 mit 200 bezeichnete hintere Flanke des positiven Teils 202 der induzierten Spannung u_{3A-3B}, welche etwa bei ihrem Nulldurchgang die Umschaltung des Flipflop 64 bewirkt. (Die ansteigende Flanke 201 in Fig. 5 entsteht direkt nach einem Umschalten des Flipflop 64, wenn der entsprechende Endstufentransistor 56 gesperrt wird.)

Beim Einschalten des Motors 4 wird durch die unterschiedliche Größe der Kondensatoren 84 (z.B. 6,8 nF) und 90 (z.B. 3,3 nF) der Transistor 100 leitend gemacht, so dass beim Start stets der Wicklungsstrang 25 über seinen Transistor 56 als erster Strom erhält und deshalb der Motor 4 aus seiner Startstellung, welche durch die Magnete 8 der Fig. 2 bewirkt wird, in der richtigen Drehrichtung startet. Der Flipflop 64 erhält auf diese Weise beim Einschalten eine elektrische Vorzugsstellung, welche der Startstellung des Rotormagneten 28 richtig zugeordnet ist.

Da der Transistor 100 durch diesen Umschaltimpuls leitend geworden ist, wird über den Widerstand 112 der Transistor 62 gesperrt, und umgekehrt wird infolge des gesperrten Transistors 102 über den Widerstand 114 der Transistor 56 eingeschaltet, so dass nun der Wicklungsstrang 25 Strom erhält.

Durch den Widerstand 114 und den Kondensator 126 wird die Einschaltung des Transistors 56 verzögert, und ebenso wird durch den Widerstand 112 und den Kondensator 128 die Abschaltung des Transistors 62 verzögert, so dass die Schaltvorgänge - trotz des schlagartigen Umschaltens des Flipflop 64 - sanft ablaufen und keine störenden Motorgeräusche durch rasche Umschaltvorgänge erzeugt werden.

Wegen der Symmetrie der Schaltung braucht die Kommutierung in umgekehrter Richtung, also vom Transistor 56 (wird gesperrt) zum Transistor 62 (wird leitend), nicht beschrieben zu werden, da die Vorgänge spiegelbildlich zu den soeben beschriebenen Vorgängen ablaufen.

Die positive induzierte Spannung an einem stromlosen Wicklungsstrang 25 oder 26 wird also durch die beschriebene Schaltung in ein Rechtecksignal umgewandelt, und die Flanke am Ende dieses Rechtecks bewirkt einen Umschaltimpuls für den Flipflop 64, durch welchen der bislang stromlose Transistor (56 oder 62) eingeschaltet und der bislang leitende Transistor (62 oder 56) abgeschaltet wird. Auf diese Weise erhält man eine sichere und zuverlässige Kommutierung durch die induzierte Spannung, wobei trotz der schlagartigen Umschaltung des Flipflops 64 eine sanfte und geräuscharme Kommutierung durch die beschriebenen Verzögerungs-Schaltelemente bewirkt wird.

Über einen Widerstand 190 ist ein äußerer Anschluss S an den Kollektor des Transistors 150 angeschlossen. Das Signal an diesem Kollektor, welches in den Fig. 7 und 8 dargestellt ist, zeigt an, ob sich der Motor 4 dreht, oder ob er blockiert ist. Wenn sich der Motor 4 dreht, erhält man am Anschluss S Impulse 194 mit einer Frequenz, die der Drehzahl des Motors proportional ist. Dieser Zustand ist in **Fig. 7** dargestellt. Ist der Motor blockiert, so erhält man am Ausgang S Impulse 196 mit einer recht hohen Frequenz, oder alternativ die Frequenz Null. Der Zustand mit der hohen Frequenz ist in **Fig. 8** dargestellt. Auf diese Weise kann leicht überwacht werden, ob der Motor 4 läuft, oder ob er blockiert ist.

### Bevorzugte Werte der Bauelemente bei Fig. 4

| Motor: | |
|---|---|
| Betriebsspannung 8 bis 16 V | |
| Leistungsaufnahme 0,5 W | |
| Drehzahl 2800 n | |
| Transistoren 56, 62 | ... BC817/40 |
| Transistoren136, 150, 170 | ... 1/2 BC857BS |
| Restliche Transistoren | ... 1/2 BC847BS |
| Dioden 164 | ... BAV99 |
| Dioden 82, 88 | ... BAS216 |
| Kondensatoren 126, 128 | ...47nF |
| Kondensator 84 | ...6,8 nF |
| Kondensator 90 | ... 3,3 nF |
| Kondensator 146 | ... 220 nF |
| Widerstände 104, 106, 118, 122, 134, 154, 172 | ...10 kΩ |
| Widerstände 108, 110, 156, 160, 174, 178, 190 | ...100 kΩ |
| Widerstände 112, 114 | ... 15 kΩ |
| Widerstand 166 | ...51 kΩ |
| Widerstand 116 | ...39 Ω |
| Widerstände140, 144 | ... 1 MΩ |

Naturgemäß sind im Rahmen der vorliegenden Erfindung vielfache Abwandlungen und Modifikationen möglich.

## Patentansprüche

1. Elektronisch kommutierter Motor (4), welcher aufweist:
- einen Stator (14), der zwei Wicklungsstränge (25, 26) aufweist, von denen - während einer Rotordrehung von 360° el.-zunächst dem einen Wicklungsstrang (25) innerhalb eines ersten Drehwinkelbereichs über einen zugeordneten ersten Halbleiterschalter (56) Strom zugeführt wird, und innerhalb eines anschließenden zweiten Drehwinkelbereichs dem anderen Wicklungsstrang (26) über einen zugeordneten zweiten Halbleiterschalter (62) Strom zugeführt wird,
- einen permanentmagnetischen Rotor (28), welcher im stromlosen Zustand des Motors (4) mindestens eine vorgegebene Drehstellung einnimmt, aus der der Rotor (28) bei Erregung eines vorgegebenen Wicklungsstranges in einer gewünschten Drehrichtung startet,
- eine Kommutierungsvorrichtung zum alternativen Einschalten des ersten Halbleiterschalters (56) oder des zweiten Halbleiterschalters (62), welche einen bistabilen Multivibrator (64) aufweist, dessen Schaltzustand durch die Spannungen gesteuert wird, die vom permanentmagnetischen Rotor (28) jeweils in demjenigen im Augenblick stromlosen Wicklungsstrang (25 bis. 26) induziert werden, der im augenblicklichen Drehwinkelbereich des Rotors (28) nicht über seinen zugeordneten Halbleiterschalter (56 bzw. 62) mit Strom versorgt wird,
wobei der bistabile Multivibrator (64) eine elektrische Vorzugsstellung (92) aufweist, die er beim Einschalten des Motors (4) einnimmt, um beim Einschaltvorgang die Stromversorgung des vorgegebenen Wicklungsstranges zu bewirken.

2. Motor nach Anspruch 1, bei welchem die im stromlosen Wicklungsstrang induzierte Spannung über eine Impulsformerstufe (80, 86) in einen Schaltimpuls (76, 78) zum Umschalten des bistabilen Multivibrators (64) umgeformt wird.

3. Motor nach Anspruch 1 oder 2, bei welchem ein Stromregler (58) vorgesehen ist, welcher den Strom (I) durch die Wicklungsstränge (25, 26) auf einen vorgegebenen Wert regelt.

4. Motor nach Anspruch 3, bei welchem eine Anordnung (94) vorgesehen ist, welche den Stromregler (58) während einer vorgegebenen Zeitspanne nach dem Einschalten des Motors (4) deaktiviert, um einen erhöhten Anlaufstrom zu ermöglichen.

5. Motor nach Anspruch 4, bei welchem die Anordnung (94) ein Schaltglied (132) aufweist, welches während einer vorgegebenen Zeitspanne nach dem Einschalten des Motors (4) eingeschaltet wird und dabei den Stromregler (58) überbrückt, um einen erhöhten Anlaufstrom durch den vorgegebenen Wicklungsstrang zu ermöglichen.

6. Motor nach einem oder mehreren der Ansprüche 3 bis 5, bei welchem die Halbleiterschalter als Leistungstransistoren (56, 62) ausgebildet sind, und jedem Leistungstransistor ein Transistor (120, 124) zugeordnet ist, welcher bei zunehmendem Motorstrom (I) stärker leitend wird und dabei den Basisstrom des ihm zugeordneten Leistungstransistors (56, 62) reduziert, um so den Motorstrom (I) im Betrieb im wesentlichen konstant zu halten.

7. Motor nach einem oder mehreren der Ansprüche 3 bis 6, bei welchem der Strom (I) durch die Wicklungsstränge (25 bzw. 26) bei laufendem Motor auf einen im wesentlichen konstanten Wert geregelt wird.

8. Motor nach einem oder mehreren der vorhergehenden Ansprüche, bei welchem für jeden Wicklungsstrang (25, 26) eine Diode (82, 88) vorgesehen ist, welche so gepolt ist, dass sie die im Betrieb durch den Rotor in den Wicklungssträngen induzierte Spannung aus demjenigen Wicklungsstrang auskoppelt, der im augenblicklichen Drehwinkelbereich des Rotors (28) nicht über seinen zugeordneten Halbleiterschalter (56 bzw. 62) mit Strom versorgt wird.

9. Motor nach Anspruch 8, bei welchem die ausgekoppelte induzierte Spannung (Fig. 5) in ein im wesentlichen rechteckförmiges Signal umgeformt wird,
und die Umschaltung des bistabilen Multivibrators (64) durch eine Flanke dieses im wesentlichen rechteckförmigen Signals gesteuert wird.

10. Motor nach einem oder mehreren der vorhergehenden Ansprüche, bei welchem ein Anschluss (S) vorgesehen ist, an welchem bei rotierendem Motor ein Signal (Fig. 7: 194) abnehmbar ist, dessen Frequenz von einer Spannung bestimmt ist, die vom permanentmagnetischen Rotor (28) in einem stromlosen Wicklungsstrang (25 bzw. 26) induziert werden, der im augenblicklichen Drehwinkelbereich des Rotors (28) nicht über seinen zugeordneten Halbleiterschalter (56 bzw. 62) mit Strom versorgt wird.

11. Motor nach einem oder mehreren der vorhergehenden Ansprüche, bei welchem der bistabile Multivibrator (64) durch den Einschaltvorgang des Motors (4) in eine elektrische Vorzugsstellung gebracht wird.

12. Motor nach einem oder mehreren der vorhergehenden Ansprüche, welcher mit einem Lüfterrad (2) gekoppelt ist.

13. Motor nach Anspruch 12, bei welchem das Lüfterrad als Radiallüfterrad (2) ausgebildet ist.
